# EUROPÄISCHE PATENTANMELDUNG

(11) **EP 1 854 938 A2**
(43) Veröffentlichungstag der Anmeldung: **14.11.2007**
(21) Anmeldenummer: 07008612.9
(22) Anmeldetag: 27.04.2007
(51) Int. Cl.: E04F 13/08, E04F 13/12, B32B 27/06, B32B 27/32, E04B 1/84

(54) **Verkleidungselement**

(30) Priorität: 12.05.2006 DE 102006022715
(71) Anmelder: Hermann Gutmann Werke AG, 91781 Weissenburg (DE)
(72) Erfinder: Dekker, Hans, 5591 MZ Heeze (NL); Neumeyer, Michael, 90482 Nürnberg (DE)
(74) Vertreter: Stippl, Hubert

(57) **Zusammenfassung**

Die Erfindung betrifft ein Verkleidungselement (1), insbesondere in Plattenform, zur Verkleidung von Wänden, Gebäuden oder sonstiger Bauteile mit einer ersten Schicht (1), einer zweiten Schicht (2) sowie einer zwischen ersten und zweiten Schicht (1 bzw. 2) befindlichen Kernschicht (3) aus Kunststoff, wobei dem Kunststoff mindestens ein das Raumgewicht und/oder die Schalldämmung erhöhender Zusatz zugegeben ist. Zweckmäßigerweise handelt es sich bei der Kernschicht (3) um eine Co-Polymer-Schicht sowie bei dem Zusatz um Calciumcarbonat. Mit Zugabe des Zusatzes wird eine Erhöhung des Raumgewichts des die Kernschicht 3 bildenden Materials, z.B. Co-Polymer um mindestens 150 %, vorzugsweise mindestens 160 %, besonders vorzugsweise mindestens 170 % (ausgehend von Co-Polymer ohne Zusatz) erhöht.

## Beschreibung

Die vorliegende Erfindung betrifft ein Verkleidungselement nach dem Oberbegriff des Anspruchs 1.

Derartige Verkleidungselemente werden am Bau zur Verkleidung von Wänden, als Außenhaut einer Fassade oder zur Verkleidung anderweitiger Bauteile verwendet.

Die Aufgabe der vorliegenden Erfindung besteht darin, ein neuartiges Verkleidungselement zur Verfügung zu stellen, welches einerseits für Renovierungsmaßnahmen bei bereits vorgegebenen Fassadengeometrien verwendbar ist andererseits gute mechanische und schalldämmende Eigenschaften mit sich bringt.

Die vorstehende Aufgabe wird bei dem Verkleidungselement gemäß dem Oberbegriff des Anspruchs ein dadurch gelöst, dass dem Kunststoff der Kemschicht mindestens ein das Raumgewicht und/oder die Schalldämmung erhöhender Zusatz zugegeben ist. Das erfindungsgemäße Verkleidungselement besitzt hierdurch ein im Vergleich zu herkömmlichen Verkleidungselementen verbessertes Schalldämmverhalten bei hoher Biegesteifigkeit. Darüber hinaus zeichnet sich das erfindungsgemäße Verkleidungselement durch eine geringfügige Stärke aus, so dass es trotz verbesserter Schalldämmung vielseitig einsetzbar bleibt und zwar insbesondere auch bei Sanierungsmaßnahmen bei bereits bestehenden Gebäuden, da durch die geringfügige Stärke keine Beeinträchtigung der Gesamtoptik begründet wird. Ferner kann das Verkleidungselement für den Schallschutzbereich als Lärmdämmwandverkleidung verwendet werden.

Zweckmäßigerweise wird der Zusatz in der Menge hinzugefügt, dass sich das Raumgewicht der Kemschicht (ausgehend von Co-Polymer ohne Zusatz) um mindestens 150 %, vorzugsweise mindestens 160 %, besonders vorzugsweise mindestens 170 % erhöht. Hierdurch wird eine gute Schalldämmung sowie auch Vibrationsdämmung für die in Frage kommenden Einsatzbereiche erzielt.

Die Schalldämmung wird um einen Betrag von 1,0 dB, vorzugsweise 2,0 dB, besonders vorzugsweise 3,0 dB im Vergleich zu einem Verkleidungselement ohne Zusatz verbessert.

Zweckmäßigerweise umfasst die Kernschicht ein Co-Polymer oder besteht aus letzterem.. Das Co-Polymer dient als Trägermaterial. Hierdurch wird zum einen eine hohe Biegesteifigkeit bei niedrigem Plattengewicht, zum anderen eine gute Umweltfreundlichkeit, da Recycling problemlos möglich ist, gewährleistet.

Vorzugsweise kann PE als Bestandteil des Co-Polymers oder als Co-Polymer vorgesehen sein.

Als Zusatz zum Co-Polymer, vorzugsweise alsHauptbestandteil der Kernschicht, wird zweckmäßigerweise Calciumcarbonat verwendet., Hierbei bildet das Calciumcarbonat mit dem Zusatz enen einen sogenannten Compound. Bei einem Compound handelt es sich um einen Kunststoff, dem Füll- oder Verstärkungsstoffe beigemischt worden sind.

Das Calciumcarbonat wird vorzugsweise in Form von fein verteilten, in den Kunststoff der Kemschicht eingebrachten Partikeln verwendet. Calciumcarbonat ist besonders vorteilhaft, da es eine besonders wirksame Schalldämmerhöhung gewährleistet. Darüber hinaus ist das gesamte Verkleidungselement umweltfreundlich und einfach dem Recyclingprozess zuführbar. Calciumcarbonat ist im Übrigen als Rohstoff vergleichsweise günstig in der Anschaffung, so dass keine wesentliche Verteuerung der Verkleidungselemente im Vergleich zu bekannten Verkleidungselementen durch diesen Zusatz sich ergibt.

Zweckmäßigerweise wird der Zusatz in einer Größenordnung von 50 % bis 70 % Volumenprozent (bezogen auf das Volumen der Kernschicht) hinzugegeben.

Für die erste Schicht und/oder für die zweite Schicht, vorzugsweise für beide Schichten sind zweckmäßigerweise Aluminiumbleche vorgesehen. Aluminiumbleche sind ebenfalls umweltfreundlich und gut recycelbar. Darüber hinaus können sie in verschiedensten farblichen oder sonstigen Designausführungen ausgestaltet werden, z.B. in einer Vielzahl von Standardfarben, Metallicfarben und/oder oberflächenbehandelt, z.B. gebürstet.

Die Stärkenbereiche der ersten und zweiten Schicht gemäß der vorliegenden Erfindung liegen zweckmäßigerweise in den Bereichen von nur 0,1 mm - 1,2 mm, vorzugsweise nur 0,3 mm - 1,0 mm, besonders vorzugsweise nur 0,4 mm - 0,7 mm.

Die Stärkenbereiche der Kemschicht gemäß vorliegender Erfindung liegen zweckmäßigerweise im Bereich von nur 1,5 mm - 8,0 mm, vorzugsweise nur 2,0 mm - 6,0 mm, besonders vorzugsweise nur 2,0 mm - 5,0 mm. Daraus resultieren sehr dünne Verkleidungselemente mit sehr guten mechanischen, Schalldämmsowie geometrischen Eigenschaften (hervorragende Planheit ohne Wellenbildung während der Herstellung sowie im Einsatz).

Die ersten und zweiten Schichten sind mit der Kernschicht über je eine insbesondere vollflächige Klebeschicht miteinander verbunden.

Das vorstehend beschriebene Verkleidungselement hat darüber hinaus den Vorteil, dass es nach der DIN 4102 sowie nach der DIN EN 13501-1 unter die Rubrik "normal entflammbar", vorzugsweise unter die Rubrik "schwer entflammbar" fällt.

Eine zweckmäßige Ausgestaltung der vorliegenden Erfindung ist in der beigefügten Zeichnungsfigur näher erläutert.

Bezugsziffer 1 bezeichnet das Verkleidungselement in seiner Gesamtheit. Das Verkleidungselement ist beispielsweise als Standardmaß für einen individuellen Zuschnitt vorgesehen. Es handelt sich um einen plattenförmigen Körper exakter Planebenheit.

Das Verkleidungselement 1 umfasst eine Kernschicht 3, die über je eine vollflächige Klebeschicht 4 bzw. 5 mit je einem Aluminiumblech 1 bzw. 2 fest miteinander verbunden ist.

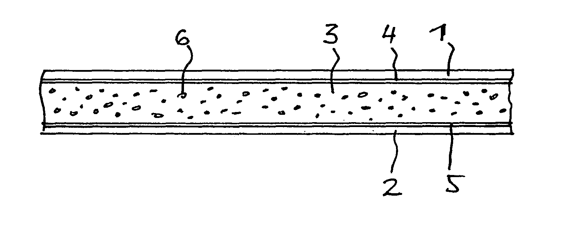

Die Kernschicht 3 besteht zweckmäßigerweise aus Kunststoff, vorzugsweise aus Co-Polymer. Im Bereich der Kemschicht 3 ist ein Zusatz in Form fein verteilter Partikel 6, die in der einzigen Figur aus Darstellungsgründen übertrieben dargestellt sind, vorgesehen. Hierbei handelt es sich zweckmäßigerweise um Calciumcarbonat in Form fein verteilter Partikel 6, die in der einzigen Figur aus Darstellungsgründen übertrieben dargestellt sind. Die Dichte der Kernschicht 3 mit Zusatz liegt im Bereich von 1,5 - 2,0 g/cm³ vorzugsweise 1,7 - 1,9 g/cm³. Demgegenüber liegt die Dicht der Kemschicht ohne Zusatz bei 0,92 g/cm³.

Mit Zugabe des Zusatzes wird eine Erhöhung des Raumgewichts des die Kernschicht 3 bildenden Materials, z.B. Co-Polymer um mindestens 150 %, vorzugsweise mindestens 160 %, besonders vorzugsweise mindestens 170 % (ausgehend von Co-Polymer ohne Zusatz) erhöht.

Darüber hinaus bewirkt die vorgenannte Zugabe eine Verbesserung des Schalldämmverhaltens um mindestens 1,0 dB, vorzugsweise mindestens 2,0 dB, besonders vorzugsweise mindestens 3,0 dB bezogen auf Schallmessungen des Frequenzbereichs 100 Hz - 5000 Hz.

Die Stärke des jeweiligen Aluminiumblechs liegt zweckmäßigerweise im Bereich von nur 0,4 mm - 0,7 mm, besonders vorzugsweise nur 0,5 mm. Die Stärke der Kernschicht liegt zweckmäßigerweise im Bereich von nur 2,0 mm - 5,0 mm.

Die Ausführung des Verkleidungselements ist weiterhin dadurch gekennzeichnet, dass es als "normal entflammbar" bzw. vorzugsweise als "schwer entflammbar" nach der Norm DIN 4102 und/oder DIN EN 13501-1 einzustufen ist.

Das erfindungsgemäße Verkleidungselement besitzt eine hohe Biegesteifigkeit bei niedrigem Plattengewicht. Das Verhältnis von Biegesteifigkeit (KNm²/m) zu Gewicht (kg/m²) liegt in einem Bereich von 0,01 - 0,1, vorzugsweise 0,02 - 0,85. Das Verhältnis von Widerstandsmoment W (cm³/m) zu Gewicht (kg/m²) liegt zweckmäßigerweise im Bereich von 0,1 - 0,6, vorzugsweise 0,2 - 0,5.

Das jeweilige Aluminiumblech kann in vorteilhafterweise in unterschiedlichsten Farben und/oder Oberflächenbehandlungen (z.B. gebürstete Oberfläche) ausgeführt sein.

Das Verkleidungselement eignet sich aufgrund seiner Eigenschaften insbesondere für die Um- oder Neugestaltung von Fassaden, die Sanierung sowie Renovierung von Gebäuden als auch für den Innenausbau, z.B. bei Messen sowie im Ausstellungsbau. Darüber hinaus kann das erfindungsgemäße Verkleidungselement für den Schallschutzbereich als Lärmdämmwandverkleidung verwendet werden. Die Erfindung stellt daher eine ganz wesentliche Bereichung des Standes der Technik dar.

### BEZUGSZEICHENLISTE

- 1: erste Schicht
- 2: zweite Schicht
- 3: Kernschicht
- 4: Klebeschicht
- 5: Klebeschicht
- 6: Partikel

## Patentansprüche

1. Verkleidungselement (1), insbesondere in Plattenform, zur Verkleidung von Wänden, Gebäuden oder sonstiger Bauteile mit
einer ersten Schicht (1),
einer zweiten Schicht (2) sowie
einer zwischen ersten und zweiten Schicht (1 bzw. 2) befindlichen Kemschicht (3) aus Kunststoff,
**dadurch gekennzeichnet, dass**
dem Kunststoff mindestens ein das Raumgewicht und/oder die Schalldämmung erhöhender Zusatz zugegeben ist.

2. Verkleidungselement nach Anspruch 1,
**dadurch gekennzeichnet, dass**
die Hinzufügung des Zusatzes in einer Menge erfolgt, dass die Erhöhung des Raumgewichts mindestens 150 %, vorzugsweise mindestens 160 %, besonders vorzugsweise mindestens 170 % im Vergleich zum Raumgewicht des Kunststoffs der Kernschicht ohne Zusatz beträgt.

3. Verkleidungselement nach Anspruch 1 oder 2,
**dadurch gekennzeichnet, dass**
die Hinzufügung des Zusatzes in einer Menge erfolgt, dass eine Erhöhung der Schalldämmung mindestens um 1,0 dB, vorzugsweise 2,0 dB, besonders vorzugsweise 3,0 dB im Vergleich zu der Schalldämmung der Kernschicht ohne Zusatz beträgt.

4. Verkleidungselement gemäß mindestens einem der vorhergehenden Ansprüche,
**dadurch gekennzeichnet, dass**
die Kernschicht (3) aus Co-Polymer besteht oder dieses im Wesentlichen umfasst.

5. Verkleidungselement nach mindestens einem der vorhergehenden Ansprüche,
**dadurch gekennzeichnet, dass**
der Zusatz aus Calciumcarbonat besteht oder dieses im Wesentlichen umfasst.

6. Verkleidungselement nach mindestens einem der vorhergehenden Ansprüche,
**dadurch gekennzeichnet, dass**
der Zusatz in Form fein verteilter Partikel (6) in der Kernschicht (3) vorliegt.

7. Verkleidungselement nach mindestens einem der vorhergehenden Ansprüche,
**dadurch gekennzeichnet, dass**
die Dichte der Kernschicht (3) im Bereich von 1,5 - 2,0 % vorzugsweise 1,7 - 1,99/cm³ beträgt.

8. Verkleidungselement nach mindestens einem der vorhergehenden Ansprüche,
**dadurch gekennzeichnet, dass**
als erste Schicht (1) und/oder zweite Schicht (2) ein Aluminiumblech vorgesehen ist.

9. Verkleidungselement nach mindestens einem der vorhergehenden Ansprüche,
**dadurch gekennzeichnet, dass**
die Stärke der ersten Schicht (1) im Bereich von 0,1 mm - 1,2 mm, vorzugsweise 0,3 mm - 1,0 mm, besonders vorzugsweise 0,4 mm - 0,7 mm beträgt.

10. Verkleidungselement nach mindestens einem der vorhergehenden Ansprüche,
**dadurch gekennzeichnet, dass**
die Stärke der Kernschicht (3) im Bereich von 1,5 mm - 8,0 mm, vorzugsweise 2,0 mm - 6,0 mm, besonders vorzugsweise 2,0 mm - 5,0 mm beträgt.

11. Verkleidungselement nach mindestens einem der vorhergehenden Ansprüche,
**dadurch gekennzeichnet, dass**
die erste Schicht (1), die Kernschicht (3) sowie die zweite Schicht (2) jeweils über eine Klebeschicht (4, 5) miteinander verbunden sind.
